# EUROPÄISCHE PATENTANMELDUNG

(11) **EP 0 623 558 A1**
(43) Veröffentlichungstag der Anmeldung: **09.11.1994**
(21) Anmeldenummer: 94106290.3
(22) Anmeldetag: 22.04.1994
(51) Int. Cl.: C02F 1/46

(54) **Einrichtung zur Reinigung und Aufbereitung von Schmutzwässern mittels Elektrolyse**

(30) Priorität: 07.05.1993 DE 4315117
(71) Anmelder: KLOSE ABWASSERTECHNIK GmbH, D-79350 Sexau (DE)
(72) Erfinder: Klose, Giselher, D-79350 Sexau (DE)
(74) Vertreter: Trappenberg, Hans

(57) **Zusammenfassung**

Bei einer Einrichtung zur Reinigung und Aufbereitung von Schmutzwässern mittels Elektrolyse, die aus mindestens zwei jeweils zentrisch angeordneten Röhren aus Eisen und/oder Aluminium mit einem konzentrischen Einlaufstutzen besteht, wobei die eine Röhre als Kathode und die andere als Anode geschaltet und wobei der Ringraum zwischen beiden Röhren der Reaktionsraum für durchströmendes Schmutzwasser ist, wird vorgeschlagen, Kathode und Anode umpolbar zu schalten. Durch die Umpolung des elektrischen Feldes gelingt es in einfacher Weise, Ablagerungen auf den Elektroden des Reaktors zu lösen und mit dem behandelten Schmutzwasser aus dem Reaktionsraum zu spülen.

## Beschreibung

Die Erfindung betrifft eine Einrichtung zur Reinigung und Aufbereitung von Schmutzwässern mittels Elektrolyse, bestehend aus zwei zentrisch angeordneten Röhren aus Eisen und/oder Aluminium mit einem konzentrischen Einlaufstutzen, wobei die eine Röhre als Kathode und die andere als Anode geschaltet und der Ringraum zwischen beiden Röhren der Reaktionsraum für durchströmendes Abwasser ist.

Verfahren zur elektrolytischen Behandlung von Schmutzwässern in sogenannten Röhrenreaktoren sind allgemein bekannt. Sie arbeiten mit Gleichstromniederspannung, wobei die Elektroden entweder beständig bleiben oder durch die Elektrolyse aufgelöst werden. Als Elektroden sind unter anderem Eisen und Aluminium bekannt geworden.

Der Aufbau der bekannt gewordenen Röhrenreaktoren ist etwa folgendermaßen:
Als Hüllrohr dient ein Kunststoffrohr, zum Beispiel aus Polypropylen, welches isolierenden Charakter hat. In dieses Hüllror hineingestellt wird zum Beispiel ein Stahl- oder Aluminiumrohr, welches eng am Kunststoffrohr anliegt. Von oben wird in das innere Rohr ein weiteres Stahl- oder Aluminiumrohr eingeführt. Der Ringraum zwischen beiden Rohren, von denen das eine als Kathode und das andere als Anode geschaltet wird, ist der Reaktionsraum für die elektrolytische Behandlung des durchströmenden Schmutzwassers.

Nachteilig an den bekannt gewordenen Röhrenreaktoren ist, daß ihre Verfügbarkeit bei der Reinigung von Schmutzwässern, welche dazu neigen, während der Elektrolysebehandlung Elektroden mit Ablagerungen zu belegen, sehr stark eingeschränkt ist. Zu diesen Schmutzwässern gehören unter anderem tensidhaltige, emulsionshaltige und auch lackinhaltsstoffbelastete.

Der Erfindung liegt die Aufgabe zugrunde, einen Röhrenreaktor der eingangs genannten Art auch Schmutzwässern zugänglich zu machen, die bei der Elektrolysebehandlung zum Ausfällen von Ablagerungen neigen.

Diese Aufgabe wird bei einer Einrichtung der eingangs genannten Art erfindungsgemäß dadurch gelöst, daß Kathode und Anode umpolbar geschaltet sind.

Es hat sich überraschenderweise gezeigt, daß Ablagerungen auf den Elektroden eines Röhrereaktors sich im Falle der vorgeschlagenen Umpolung der Elektroden wieder lösen und zusammen mit behandeltem Schmutzwasser dem nachgeschalteten Flockungsbecken zugeführt werden können.

Bei Abwässern, deren Zusammensetzung und damit auch deren Neigung zur Bildung von Ablagerungen bekannt ist, kann der zeitliche Abstand zwischen den durchzuführenden Umpolungen in Abhängigkeit von der jeweiligen Schmutzwasserart von vornherein konstant eingestellt werden.

Es ist nach der Erfindung jedoch auch ohne weiteres möglich, den zeitlichen Abstand einer Umpolung in Abhängigkeit von dem jeweiligen Beladungszustand der Elektroden, das heißt in Abhängigkeit des elektrischen Widerstands zwischen beiden Elektroden einzustellen beziehungsweise zu steuern.

Bei größeren Anlagen, in denen mehrere konzentrische Röhrenreaktoren in Reihe angeordnet sind, erweist es sich insbesondere im Zusammenhang mit der Behandlung von bekannten Abwässern als besonders einfach und zweckmäßig, alle Reaktoren gleichzeitig umpolbar auszubilden, so daß über eine einzige Steuereinrichtung die Gesamtzahl der Reaktoren geschaltet werden kann.

Je nach Art des zu behandelnden Abwassers kann es sich bei der Reihenanordnung mehrerer Reaktoren jedoch auch als zweckmäßig erweisen eine Steuerung vorzusehen, die die individuelle Umpolung einzelner Röhrereaktoren ermöglicht. In diesem Falle können zum Beispiel stärker belastete Reaktoren häufiger umgepolt werden als schwächer belastete.

## Patentansprüche

1. Einrichtung zur Reinigung und Aufbereitung von Schmutzwässern mittels Elektrolyse, bestehend aus mindestens zwei jeweils zentrisch angeordneten Röhren aus Eisen und/oder Aluminium mit einem konzentrischen Einlaufstutzen, wobei die eine Röhre als Kathode und die andere als Anode geschaltet und wobei der Ringraum zwischen beiden Röhren der Reaktionsraum für durchströmendes Schmutzwasser ist,
dadurch gekennzeichnet,
daß Kathode und Anode umpolbar geschaltet sind.

2. Einrichtung nach Anspruch 1,
dadurch gekennzeichnet,
daß der zeitliche Abstand der Umpolung in Abhängigkeit von der jeweils zu behandelnden Abwasserart einstellbar ist.

3. Einrichtung nach Anspruch 1,
dadurch gekennzeichnet,
daß der zeitliche Abstand der Umpolung steuerbar ist in Abhängigkeit des elektrischen Widerstands zwischen beiden Elektroden.

4. Einrichtung nach einem der
Ansprüche 1 bis 3,
dadurch gekennzeichnet,
daß mehrere Reaktoren in Reihe angeordnet und alle gleichzeitig umpolbar geschaltet sind.

5. Einrichtung nach einem der
Ansprüche 1 bis 3,
dadurch gekennzeichnet,
daß mehrere konzentrische Reaktoren in Reihe angeordnet und jeder für sich umpolbar ausgebildet ist.
